# NEUE EUROPÄISCHE PATENTSCHRIFT

(11) **EP 2 759 194 B2**
(45) Veröffentlichungstag und Bekanntmachung des Hinweises auf die Entscheidung über den Einspruch: **22.02.2023**
(45) Hinweis auf die Patenterteilung: 23.08.2017
(21) Anmeldenummer: 13195394.5
(22) Anmeldetag: 03.12.2013
(51) Int. Cl.: A01F 15/08, A01B 67/00, A01B 69/00

(54) **Kombination aus einem Zugfahrzeug und einer davon gezogenen landwirtschaftlichen Erntemaschine**
Combination of a tractor and an agricultural harvesting machine towed by it
Combinaison d'un véhicule de traction et d'une moissonneuse tirée par celui-ci

(30) Priorität: 28.01.2013 DE 102013100793
(43) Veröffentlichungstag der Anmeldung: 30.07.2014
(73) Patentinhaber: Usines CLAAS France, 57141 Metz (FR)
(72) Erfinder: Scharf, Thorsten, 66693 Orscholz (DE); Waechter, Julien, 57640 Failly (FR); Chesnier, Frédéric, 54700 orroy les Pont á Mousson (FR)
(74) Vertreter: Pellengahr, Maximilian Rudolf

(56) Entgegenhaltungen:
- EP-A1- 2 292 085
- EP-A2- 1 153 538
- EP-A2- 1 153 538
- WO-A1-2011/039140
- BE-A3- 1 019 827
- DE-A1-102005 029 405
- DE-A1-102010 031 344
- US-B1- 7 877 970
- VON HOYNINGEN-HUENE, MARTIN et al.: "Tractor-Implement-Automation and its application to a tractor-loader wagon combination", 2nd International Conference on Machine Control & Guidance Proceedings, 2010, pages 171-185, ISSN: 1864-1113
- THIELICKE, RENE: "Automatisierung und Optimierung traktorgebundener landwirtschaftlicher Arbeiten mit zapfwellengetriebenen Geräten an ausgewählten Beispielen", Dissertation, 2005,

## Beschreibung

Die Erfindung betrifft eine Kombination aus einem Zugfahrzeug und einer davon gezogenen landwirtschaftlichen Erntemaschine gemäß dem Oberbegriff des Anspruchs 1

Eine derartige Kombination ist z.B aus Dokument EP 1 153 538 A2 bekannt. In der Grünfutteremte werden oftmals landwirtschaftliche Erntemaschinen wie insbesondere Ballenpressen oder Ladewagen eingesetzt, die von einem Zugfahrzeug über das Feld gezogen werden. Abhängig von der Bauart und Große müssen die Erntemaschinen dabei von dem Zugfahrzeug auch mit Antriebsleistung versorgt werden, um Arbeitsaggregate der Erntemaschine, welche zur Förderung und/oder zur Bearbeitung des Ernteguts dienen, anzutreiben. Im Fall einer Quaderballenpresse handelt es sich bei den Arbeitsaggregaten beispielsweise um den Presskolben, den Raffer, ggf. die Schneideinrichtung, die Pickup. In der Landwirtschaft eingesetzte Zugfahrzeuge wie insbesondere Traktoren, sind zu diesem Zweck mit einem heckseitigen Zapfwellenausgang ausgestattet, der mit einer der Erntemaschine zugeordneten Antriebswelle in Antriebsverbindung bringbar ist. Der Zapfwellenausgang des Zugfahrzeugs wird in der Regel von dessen (Haupt-) Antriebsmotor angetrieben Auf diese Weise bilden der Antriebsmotor des Zugfahrzeugs, der Zapfwellenausgang und die Antriebswelle der Erntemaschine wesentliche Elemente eines Antriebsstrangs zum Antrieb der Arbeitsaggregate der Erntemaschine.

Beim Ernteeinsatz einer von einem Traktor über das Feld gezogenen Quaderballenpresse, deren Arbeitsaggregate vom Traktor angetrieben werden, besteht für den Fahrer des ziehenden Traktors eine Schwierigkeit darin, einen sicheren Überblick über eine Fülle sich laufend ändernder Betriebsparameter zu haben, die während der Fahrt über das Feld für das Gelingen des Ernteprozesses eine Rolle spielen. So beeinflussen beispielsweise Faktoren wie Art, Menge, Volumen. Feuchtigkeit oder die sonstige Beschaffenheit des aufgenommen Ernteguts den Ernteprozess in hohem Maße. Weiterhin beeinflussen maschinelle Faktoren den Ernteprozess wie beispielsweise die Leistungsreserve und Drehzahl des Antriebsmotors des Traktors, die Fahrgeschwindigkeit des Traktors (und der davon gezogene Presse), die Geschwindigkeit und Belastung einzelner Arbeitsaggregate (z.B. Pickup, Schneidrotor, Raffer, Presskolben) der Presse usw..

Die Faktoren stehen teils in komplexer Wechselwirkung zueinander und ändern sich zumeist laufend während der Erntefahrt. Eine Herausforderung für einen Fahrer besteht vor diesem Hintergrund insbesondere in der Wahl einer geeigneten Fahrgeschwindigkeit. Denn nur mit einer nicht zu hoch gewählten Fahrgeschwindigkeit kann die Kombination aus Traktor und Presse bei der Erntefahrt mit ausreichender Leistungsreserve des Antriebsmotors betrieben werden, um beispielsweise unter sich plötzlich verändernden Ernte- und/oder Betriebsbedingungen einen Stillstand des Antriebsstrangs und/oder Beschädigungen an Maschine oder Mensch zu vermeiden. Für die Wahl einer solchen, "nicht zu hohen" Geschwindigkeit muss der Fahrer jedoch eine Vielzahl von Faktoren berücksichtigen. In der Praxis führt dies regelmäßig dazu, dass der Fahrer aus Sicherheitsgründen eine niedrigere Fahrgeschwindigkeit wählt, als es die tatsächlichen Bedingungen zulassen würden. Das Leistungspotential der Kombination lässt sich dann nicht voll ausschöpfen. Möchte der Fahrer bei der Erntefahrt darüber hinausgehende und/oder alternative Ziele verfolgen, so braucht er dazu viel Kenntnis und Erfahrung. Eine ungeeignete Wahl der Geschwindigkeit kann jedenfalls auch weitere nachteilige Effekte haben, wie den einer verschlechterten Qualität der gepressten Ballen (schlechte Ballenform, Zerstampfen des Ernteguts).

Vor diesem Hintergrund ist es eine Aufgabe der vorliegenden Erfindung, eine Kombination der eingangs genannten Art anzugeben, die den Fahrer bei der Wahl einer geeigneten Fahrgeschwindigkeit entlastet.

Diese Aufgabe wird gelöst durch eine Kombination gemäß Anspruch 1. Diese zeichnet sich durch eine Steuereinrichtung aus, die in einem Erntemodus betreibbar ist, um in Abhängigkeit erfasster Betriebsparameter der Erntemaschine und des Zugfahrzeugs eine Fahrgeschwindigkeit für die Kombination vorzugeben. Erfindungsgemäß ist dadurch vorteilhaft sichergestellt, dass die Fahrgeschwindigkeitswahl unter laufender Berücksichtigung von Einflussfaktoren der gesamten Kombination erfolgt. Dadurch kann sichergestellt werden, dass Maschinenstillstände oder -beschädigungen aufgrund von Überlastungen von Arbeitsaggregaten zuverlässig vermieden werden. Daneben kann aufgrund der ganzheitlichen Betrachtung von Zugfahrzeug und Erntemaschine auch für weniger erfahrene Fahrer laufend ein besonders effizienter Betrieb der Kombination - beispielsweise nahe deren Auslastungsgrenze oder nahe am Qualitätsoptimum - gewährleistet werden. Für den Fahrer stellt die erfindungsgemäße Geschwindigkeitsvorgabe eine deutliche Entlastung dar.

Gemäß einer einfachen Umsetzung der Erfindung kann die Vorgabe der Fahrgeschwindigkeit in Form einer Empfehlung an den Fahrer erfolgen, beispielsweise im Sinne einer optischen Anzeige oder einem akustischen Signal. Der Fahrer kann dann selbst entscheiden ob und in welchem Maße er dieser Empfehlung folgt.

Gemäß einer demgegenüber komfortableren Weiterbildung ist die Fahrgeschwindigkeitsvorgabe Teil eines automatischen Fahrgeschwindigkeitsreglers, welcher die vorgegebene Fahrgeschwindigkeit laufend selbsttagig am Zugfahrzeug regelt. In diesem Fall ist der Fahrer - bei Betrieb im Erntemodus - vollständig von der Fahrgeschwindigkeitswahl entlastet.

Erfindungsgemäß ist bei Betrieb im Erntemodus die von der Steuereinrichtung vorgegebene Fahrgeschwindigkeit stets derart gewählt, dass die Kombination unter Gewährleistung eines sicheren Betriebs, insbesondere der Vermeidung von Überlastungen von Arbeitsaggregaten oder sonstigen ungewünschten Ereignissen, zumindest ein vom Maschinenbediener vorgebbares Ernteziel erreicht. Mit anderen Worten berücksichtigt die Steuereinrichtung bei der Fahrtgeschwindigkeitsvorgabe dann (zumindest) ein Ernteziel, d.h. sie versucht eine Fahrgeschwindigkeit zu wählen, mit der sich - vor dem Hintergrund der jeweils aktuell vorliegenden Betriebsparameter - ein gewünschter Ernteerfolg in möglichst hohem Maße erreichen lässt.

Da in der Praxis oftmals verschiedene Ernteziele gleichzeitig eine Rolle spielen, ist erfindungsgemäß die Steuereinrichtung betreibbar, mehrere Ernteziele (gleichzeitig) zu berücksichtigen, wobei durch den Maschinenbediener eine Gewichtung der Ernteziele untereinander vorgebbar ist. Im Fall einer Ballenpresse lassen sich so beispielweise gleichzeitig ein Durchsatzziel und ein Qualitätsziel setzen, wobei durch die vornehmbare Gewichtung eine Priorisierung der Ernteziele untereinander möglich ist. Es handelt es sich bei dem zumindest einen Ernteziel um die Erreichung eines hohen Durchsatzes und bei einem weiteren Ernteziel um die Erreichung einer hohen Erntegutqualität, insbesondere erreichbar durch eine hohe Dichte.

Zur Ermittlung einer geeigneten Fahrgeschwindigkeit ist es zweckmäßig, dass der Steuereinrichtung eine Vielzahl erfasster Betriebsparameter zugeführt werden, die beispielsweise über Sensoren erfasst werden. Der Begriff Betriebsparameter ist dabei allgemein zu verstehen, d.h. es kann sich um Einflussfaktoren aller Art handeln. Insbesondere handelt es sich bei den Betriebsparametem um Größen, die mit dem Ernteprozess und/oder daran beteiligten Maschinenkomponenten in weiterem Sinne in Zusammenhang stehen.

Gemäß einer vorteilhaften Weiterbildung der Erfindung werden als Betriebsparameter der Erntemaschine zumindest eine, vorzugsweise mehrere die mechanische Belastung eines oder mehrerer Arbeitsaggregate kennzeichnende Größen, wie insbesondere deren Geschwindigkeit, Drehmoment, Arbeitsdruck und/oder dergleichen berücksichtigt.

Gemäß einer vorteilhaften Weiterbildung der Erfindung werden als Betriebsparameter der Erntemaschine weiterhin zumindest eine, vorzugsweise mehrere auf den Ernteprozess bezogene Größen wie insbesondere die Erntegutfeuchte, das Erntegutvolumen, die Pressdichte, die Paketgröße (der Presskammer zugeführte Portionsgröße, welche wiederum Rückschlüsse auf die Erntegutdichte zulässt), der Durchsatz und/oder dergleichen berücksichtigt.

Zweckmäßigerweise werden als Betriebsparameter des Zugfahrzeugs die Last dessen Antriebsmotors und/oder die aktuelle Getriebeübersetzung des Fahrantriebs des Zugfahrzeugs berücksichtigt. Weitere sonstige Parameter wie beispielsweise der Radschlupf, die verbleibende Kraftstoffreserve usw. sind denkbar.

Zur Erzielung einer möglichst genauen und komfortablen Geschwindigkeitsvorgabe ist es vorteilhaft, dass die Steuereinrichtung bei der Vorgabe der Fahrgeschwindigkeit technische Kenndaten des Zugfahrzeugs, der Erntemaschine und/oder der Kombination berücksichtigt. Bei diesen Kenndaten kann sich beispielsweise um die Motorleistung, um die Länge, Gewicht (bzw. Trägheit) von Zugfahrzeug, Erntemaschine oder der Kombination handeln. Eine Berücksichtigung derartiger Kenndaten erleichtert den Betrieb einer Erntemaschine mit unterschiedlichen Zugfahrzeugen (bzw. umgekehrt). Die Kenndaten könnten vorteilhaft über ein Bussystem zwischen Zugfahrzeug und Erntemaschine ausgetauscht werden.

Eine vorteilhafte Weiterbildung der Erfindung sieht vor, dass die Steuereinrichtung betreibbar ist, eine Obergrenze für die Fahrgeschwindigkeit zu setzen, wenn der Wert eines Betriebsparameters oder die Werte einer Kombination von Betriebsparametern ein Anzeichen für eine drohende Überlastung oder einen allgemein unerwünschten Zustand der Erntemaschine, des Zugfahrzeugs oder der Kombination sind. Durch diese Sicherheitsmaßnahme wird gewährleistet, dass beim Vorliegen limitierender Randbedingungen (z.B: Erreichen der Grenze der Motorauslastung, Überschreiten einer Erntegutfeuchte, Überschreiten eines eintretenden Gutvolumens, Überschreiten einer Belastung eines Arbeitsaggregats usw.) die Fahrgeschwindigkeit unabhängig von möglicherweise gesetzten Erntezielen begrenzt wird, um Schaden aller Art zu vermeiden Gesetzte Ernteziele werden demnach erst dann verfolgt, wenn keiner der Betriebsparameter eine Limitierung darstellt.

Gemäß einer vorteilhaften Weiterbildung der Erfindung beruht die durch die Steuereinrichtung in Abhängigkeit der erfassten Betriebsparameter vorgegebene Fahrgeschwindigkeit auf empirisch ermittelten Werten.

Es bestehen unterschiedliche Möglichkeiten der Anordnung der Steuereinrichtung. Vorteilhaft ist diese der Erntemaschine zugeordnet und mit dem Zugfahrzeug insbesondere über ein Bussystem in Signalverbindung bringbar, um am Zugfahrzeug erfasste Betriebsparameter zu empfangen. Durch die Zuordnung zur Erntemaschine besteht der Vorteil, dass die Steuereinrichtung auf die speziellen Anforderungen und Gegebenheiten (Vielzahl von Arbeitsaggregaten, Sensorik) der - oftmals komplexen - Erntemaschine abgestimmt und programmiert sein kann Die Steuereinrichtung weist in diesem Fall die Fähigkeit auf, die Fahrgeschwindigkeit des Zugfahrzeugs zu steuern. Dies erfolgt ebenfalls bevorzugt über das Bussystem.

Zur komfortablen Bedienung für einen Fahrer ist vorteilhaft der Steuereinrichtung eine Bedieneinrichtung zugeordnet, die vorzugsweise in einer Fahrerkabine des Zugfahrzeugs angeordnet ist und mit der Steuereinrichtung in Kommunikationsverbindung bringbar ist.

Wie zuvor beschrieben, lässt sich die Steuereinrichtung in einem Erntemodus betreiben. Dieser Erntemodus, in dem unter Berücksichtigung der aktuellen Betriebsparameter eine Fahrgeschwindigkeit vorgegeben wird, eignet sich für die Erntefahrt unter Erntegutaufnahme beispielsweise entlang eines gelegten Erntegutschwads. Nach Bearbeitung eines solchen Schwads erreicht die Kombination jedoch regelmäßig eine Wendestelle (auch: "Vorgewende", "Feldende"). Die Erntegutaufnahme ist dort normalerweise unterbrochen und die Kombination muss ein Wendemanöver vornehmen, um den nächsten Schwad aufnehmen zu können. Um auch in dieser Situation die Kombination mit einer geeigneten Fahrgeschwindigkeit zu fahren, sieht eine vorteilhafte Weiterbildung der Erfindung vor, dass sich die Steuereinrichtung alternativ zum Erntemodus in einem Vorgewendemodus betreiben lässt, in welchem die Steuereinrichtung für die Kombination eine geeignete Fahrgeschwindigkeit vorgibt, um die Kombination am Feldende sicher und komfortabel zu wenden. Die hier vorgegebene Fahrgeschwindigkeit kann beispielsweise vom Fahrer nach persönlichem Wunsch voreinstellbar sein.

Zur einfachen Kontrolle des jeweils aktivierten Betriebsmodus, ist vorteilhaft der Wechsel zwischen einem Betrieb der Steuereinrichtung im Erntemodus und im Vorgewendemodus durch den Maschinenbediener manuell auslösbar, beispielsweise per Knopfdruck.

Eine weiterhin vorteilhafte Weiterbildung der Erfindung sieht vor, dass zumindest der Wechsel aus dem Betrieb der Steuereinrichtung im Vorgewendemodus in den Erntemodus automatisiert, insbesondere ereignisgesteuert erfolgt. Bevorzugt kann auch der Wechsel in den Vorgewendemodus automatisiert erfolgen. Der Wechsel zwischen den Betriebsmodi kann durch unterschiedlichste Ereignisse ausgelöst werden, wie beispielsweise durch (z.B. kamerabasierte) Erkennung, dass sich vor der Erntemaschine und/oder auf Maschinenelementen der Erntemaschine wieder Erntegut befindet (Wechsel in den Erntemodus) bzw. dass sich dort kein Erntegut mehr befindet (Wechsel in den Vorgewendemodus). Alternativ oder ergänzend könnte der Wechsel vom Erreichen bestimmter Positionen (oder Randbereichen) auf dem Feld abhängig gemacht werden, insbesondere unter Nutzung von Positionssensorik wie z.B satellitenbasierter Navigation (GPS)

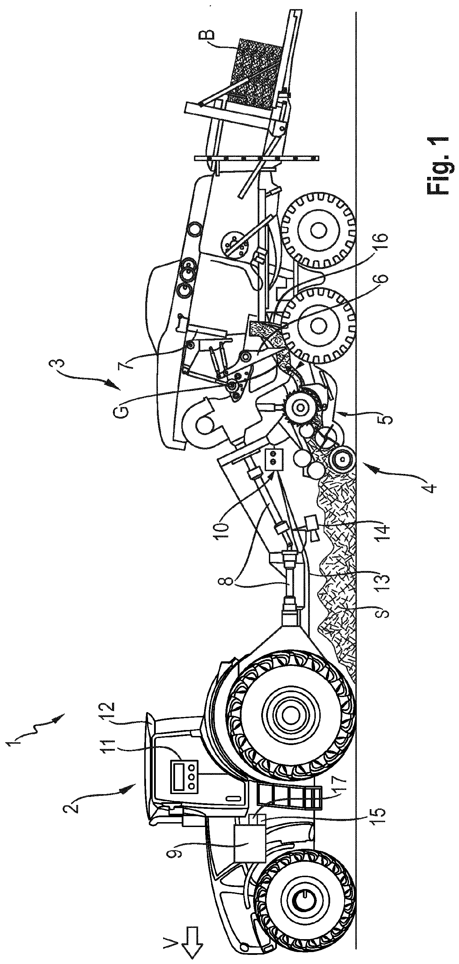

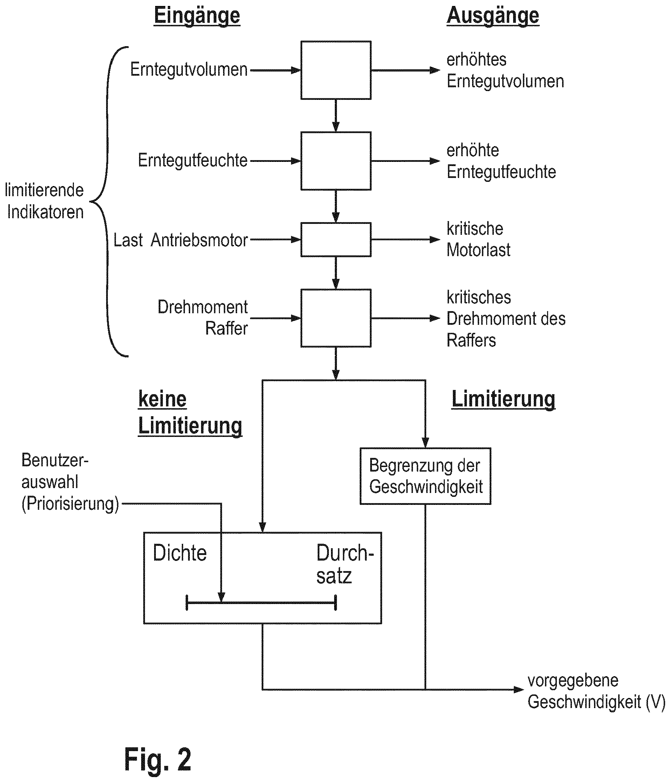

Die Erfindung wird nachfolgend anhand eines Ausführungsbeispiels näher erläutert. Dazu wird verwiesen auf die Fig. 1 und 2. Davon zeigt
- Fig. 1: eine erfindungsgemäße Kombination in schematischer Seitenansicht bei der Fahrt im Erntemodus,
- Fig. 2: ein Funktionsschema zur Erläuterung der Fahrgeschwindigkeitsvorgabe für eine wie in Fig. 1 gezeigte Kombination.

Fig. 1 zeigt in schematischer Seitenansicht eine erfindungsgemäße Kombination 1 umfassend ein Zugfahrzeug in Form eines Traktors 2 und eine davon gezogene landwirtschaftliche Erntemaschine in Form einer (Quader-) Ballenpresse 3 bei der Feldfahrt. Alternativ zu der Ballenpresse 3 könnte es sich auch um eine andere gezogene Erntemaschine handeln, die mit einem Arbeitsaggregat zur Förderung und/oder Bearbeitung von Erntegut ausgestattet ist, wie beispielsweise um einen Ladewagen.

Die Ballenpresse 3 weist verschiedene Arbeitsaggregate 4, 5, 6, 7 zur Förderung und/oder Bearbeitung von Erntegut auf. Frontseitig befindet sich eine Pick-up 4, mit der in Form eines Schwads S abgelegtes Erntegut G vom Feldboden aufgenommen, seitlich zusammengeführt und zur weiteren Bearbeitung in den Gutkanal der Ballenpresse 3 gefördert wird. Das Erntegut G durchläuft anschließend eine mit einem Schneidrotor ausgestattete Schneideinrichtung 5 und wird anschließend von einem periodisch Sammel- und Füllhübe ausführenden Raffer 6 vorverdichtet, um portionsweise (jeweils durch einen Füllhub des Raffers 6) einer Presskammer zugeführt zu werden, in der ein hin- und her beweglicher Presskolben 7 das Erntegut G zu Ballen B presst. Fertige Ballen B verlassen heckseitig die Ballenpresse 3.

Die Arbeitsaggregate 4, 5, 6, 7 der Ballenpresse 3 werden über eine Antriebswelle 8, die mit dem heckseitigen Zapfwellenausgang des Traktors 2 verbunden ist, vom Traktor 2 mit Antriebsleistung versorgt. Dazu verfügt der Traktor 2 über einen Antriebsmotor 9, der mit dem Zapfwellenausgang in Antriebsverbindung bringbar ist, so dass der Antriebsmotor 9 des Traktors 2, der Zapfwellenausgang und die Antriebswelle 8 einen Antriebsstrang für die Ballenpresse 3 bilden. Zur Verzweigung der auf die Ballenpresse 3 übertragenen Leistung auf deren einzelnen Antriebsaggregate dienen hier nicht näher zu erläuternde Getriebe.

Der Antriebsmotor des Traktors 2 ist - auf für sich übliche Weise - daneben Teil eines Antriebsstrangs des Fahrantriebs des Traktors 2, d.h. dient zum Antrieb der Räder des Traktors 2. Abhängig von der Motordrehzahl des Antriebsmotors 9 sowie einer gewählten Getriebeübersetzung zieht der Traktor 2 die Ballenpresse 3 mit einer durch einen Pfeil angedeuteten Fahrgeschwindigkeit v über das Feld.

Erfindungsgemäß zeichnet sich die Kombination 1 aus durch eine Steuereinrichtung 10, die in Abhängigkeit im laufenden Erntebetrieb erfasster Betriebsparameter der Erntemaschine 3 und des Zugfahrzeugs 2 eine Fahrgeschwindigkeit v für die Kombination 1 vorgibt. Dies sei im Folgenden näher erläutert.

Im gezeigten Ausführungsbeispiel ist die Steuereinrichtung 10 der Ballenpresse 3 zugeordnet und über eine Datenbussystem 13, vorzugsweise ISOBUS, mit dem Traktor 2 zum Datenaustausch verbunden. Insbesondere ist dazu in der Fahrerkabine 12 des Traktors 2 eine für einen Fahrer einfach zugängliche Bedieneinheit 11 angeordnet, die über das Datenbussystem 13 mit der Steuereinrichtung 10 kommunizieren kann. Die Bedieneinheit 11 verfügt neben Bedienelementen auch über eine Anzeige, beispielsweise zur Wiedergabe von Betriebsparametern. Über das Datenbussystem 13 ist die Steuereinrichtung 10 weiterhin mit einem Fahrregler 17 des Traktors 2 verbunden und kann so auf diesen Einfluss nehmen. Mit anderen Worten kann mittels der Signalverbindung zwischen Steuereinrichtung 10 und Fahrregler 17 die Erntemaschine 3 dem Traktor 2 eine Fahrgeschwindigkeit v vorgeben.

Erfindungsgemäß erfolgt diese Geschwindigkeitsvorgabe basierend auf laufend erfassten Betriebsparametern sowohl des Traktors 2 als auch der Ballenpresse 3. Zu diesem Zweck ist die Steuereinrichtung 10 mit einer Vielzahl von Signaleingängen ausgestattet, wobei zumindest die vom Traktor 2 eingehenden Signale vorzugsweise über den Datenbus 13 der Steuereinrichtung 10 zugeführt werden. Damit erübrigen sich über das Buskabel hinausgehende Kabelverbindungen zwischen Traktor 2 und Ballenpresse 3. Der Traktor 2 ist im gezeigten Ausführungsbeispiel mit einem Lastsensor 15 des Antriebsmotors 9 ausgestattet. Die so erfasste aktuelle Motorlast wird über den Datenbus 13 an die Steuereinrichtung 10 übermittelt. Vorteilhaft könnten auch die aktuelle Fahrgeschwindigkeit und/oder die aktuelle Getriebeübersetzung des Fahrantriebs des Traktors 2 oder sonstige Motor-/Getriebebetriebsdaten an die Steuereinrichtung 10 übermittelt werden. Es ist einfach denkbar, dass die Steuereinrichtung 10 über den Datenbus 13 weitere Betriebsparameter des Traktors 2 empfängt, die für die Vorgabe einer Fahrgeschwindigkeit v eine Rolle spielen.

Die Ballenpresse 3 ist mit einer Vielzahl von Sensoren ausgestattet, welche unterschiedliche Betriebsparameter der Ballenpresse 3 erfassen. Zunächst sind dies Sensoren (nicht näher dargestellt) zur Erfassung des Belastungszustands der Arbeitsaggregate wie insbesondere der Pickup 4, der Schneideinrichtung 5, des Raffers 6, des Presskolbens 7. Durch Erfassung der Geschwindigkeit, des Antriebsmoments oder des Arbeitsdrucks einzelner Maschinenkomponenten (Pickuptrommel, Schneidrotor, Rafferkurbel) erfassen die Sensoren direkt oder indirekt die Belastung zugehöriger Arbeitsaggregate.

Weiterhin sind der Ballenpresse Sensoren zugeordnet, um auf den Ernteprozess bezogene Größen zu erfassen. Hierbei handelt es sich beispielsweise um einen Feuchtesensor 16 zur Erfassung der Feuchte des Ernteguts G, eine vor der Pickup 4 angeordnete Kamera 14 zur Erfassung des Querschnitts (und damit der Größe) des aufzunehmenden Erntegutschwads S, einen Sensor zur Größenerfassung der jeweils der Presskammer zugeführten Erntegutpakete, einen Durchsatzsensor zur Erfassung der verarbeiteten Erntegutmenge. Weitere Sensoren zur Erfassung von Betriebsparametern sind denkbar.

Da der Steuereinrichtung 10 die Werte der erfassten Betriebsparameter laufend empfängt, kann diese nun in Abhängigkeit von den Erntebedingungen und der Leistungskapazität von Traktor 2 und Presse 3 eine Fahrgeschwindigkeit v vorgeben. Dies sei nachfolgend beschrieben.

Die Steuereinrichtung 10 lässt sich alternativ in zwei Betriebsmodi betreiben.

Für die wie in Fig. 1 dargestellte Erntefahrt entlang eines Schwads S wird der sogenannte "Erntemodus" aktiviert. Fig. 2 zeigt schematisch ein Funktionsschema zur Erläuterung der Fahrgeschwindigkeitsvorgabe im Erntemodus, d.h. für die in Fig. 1 gezeigte Erntefahrtsituation der Kombination 1. Im oberen Bereich beispielhaft dargestellt sind vier limitierende Indikatoren: 1. (aufzunehmendes) Erntegutvolumen, 2. Erntegutfeuchte, 3. Last Antriebsmotor, 4. Drehmoment Raffer. Jeder der Indikatoren (weitere sind denkbar) stellt eine Eingangsgröße in den Regelprozess dar und wird laufend ausgewertet. Bei Erreichen eines kritischen Wertes (Ausgabe: 1. erhöhtes Erntegutvolumen, 2. erhöhte Erntegutfeuchte, 3. kritische Motorlast, 4. kritisches Drehmoment des Raffers) wird erkannt, dass ein Limit erreicht ist. Die Fahrgeschwindigkeit v wird in diesem Fall auf ein nicht zu überschreitendes Maß begrenzt, um Fehler, Beschädigungen oder Qualitätsverluste zu vermeiden. Es ergeht ein entsprechendes Beschränkungssignal an den Fahrregler 17 des Traktors 2.

Erreicht hingegen keiner der Indikatoren einen kritischen Wert, wird eine Fahrgeschwindigkeit v ermittelt, bei welcher die Kombination 1 unter Gewährleistung eines sicheren Betriebs zumindest ein vom Maschinenbediener vorgebbares Ernteziel erreicht. Bei einem solchen Ernteziel handelt es sich um die Erreichung eines hohen Durchsatzes und bei einem weiteren Ernteziel um die Erreichung einer hohen Erntegutqualität. Erfindungsgemäß (siehe Fig. 2) kann der Maschinenbediener mittels eines (z.B. virtuellen) Schiebereglers, der vorzugsweise auf der Bedieneinheit 11 in der Fahrerkabine 12 betätigbar ist, im Sinne einer Benutzerauswahl eine Priorisierung der Ernteziele "Dichte" (Qualität) versus "Durchsatz" einstellen. Im einen Extremfall wählt der Bediener als Ernteziel nur die Dichte aus, im anderen Extremfall wählt der Benutzer als Ernteziel nur den Durchsatz aus. Der Schieberegler ermöglicht jedoch die Auswahl dazwischen liegender Priorisierungen, wodurch bei der Geschwindigkeitsvorgabe beide Ernteziele gleichzeitig berücksichtigt werden, sich jedoch eine benutzerdefinierte Gewichtung der Ernteziele untereinander einstellen lässt. Abhängig von der vorgenommenen Einstellung ermittelt die Steuereinrichtung 10 nun die Fahrgeschwindigkeit v unter Berücksichtigung der mehreren Ernteziele. In vorteilhafter Weise wird so der Fahrer von der Aufgabe entlastet, während der Erntefahrt laufend das Profil des Erntegutschwads S, die Motorauslastung, die Erntemaschinenauslastung, die Gutqualität zu beobachten. Die mögliche Priorisierung bietet dazu den Vorzug, dass schon unerfahrene Bediener eine Erntestrategie (Durchsatz und/oder Qualität, ggf. mit Priorisierung) verfolgen können, wobei ein sicherer Betrieb der Aggregate und des Antriebsmotors gewährleistet ist. Dabei ermöglicht die laufend an die Ernte- und Maschinenbedingungen angepasste Geschwindigkeitsvorgabe auf vorteilhafte Weise einen Betrieb der Kombination nahe der Leistungsgrenze.

Für die jeweilige Ermittlung der vorzugebenden Fahrgeschwindigkeit v greift die Steuereinrichtung 10 bevorzugt auf empirisch ermittelte Werte zurück, d.h. auf Geschwindigkeitswerte, die beispielsweise von einem erfahrenen Fahrer für die Kombination ermittelt wurden und entsprechend hinterlegt sind. Vorzugsweise berücksichtigt die Steuereinrichtung 10 bei der Vorgabe der Fahrgeschwindigkeit v weiterhin technische Kenndaten (Länge, Gewicht. Trägheit. Leistung) des Zugfahrzeugs 2. der Erntemaschine 3 und/oder der Kombination 1, um beispielsweise die empirisch ermittelten Werte an Maschinen, insbesondere Traktoren mit abweichenden Kenndaten anzupassen.

Alternativ zum zuvor beschriebenen Erntemodus ist die Steuereinrichtung 10 in einem Vorgewendemodus betreibbar. Der Vorgewendemodus wird bevorzugt aktiviert, wenn die Traktor Erntemaschine-Kombination das Feldende (auch: Vorgewende) oder das Ende eines Schwads erreicht. In diesem Fall muss die Kombination üblicherweise ein Wendemanöver durchführen, um den nächsten Schwad zu erreichen. Demnach beinhaltet der Betrieb im Vorgewendemodus, dass die Steuereinrichtung 10 für die Kombination 1 eine geeignete Fahrgeschwindigkeit v₀ vorgibt, um die Kombination 1 am Feldende zu wenden. Diese Fahrgeschwindigkeit v₀ liegt in der Regel deutlich unter der vorigen Erntegeschwindigkeit. damit ein sicheres und komfortables Wenden möglich ist. Vorteilhaft kann der Maschinenbediener für die beim Wenden bevorzugte Fahrgeschwindigkeit v₀ manuell einen Wert in der Steuereinrichtung 10 hinterlegen.

Ein Wechsel zwischen dem Erntemodus und dem Vorgewendemodus kann auf unterschiedliche Weisen erfolgen. Zum einen kann die Betriebsmodus manuell durch den Maschinenbediener auswählbar sein, vorzugsweise durch entsprechende Bedienmöglichkeit über die Bedieneinheit 11.

Ein besonders komfortabler Wechsel wird durch automatisiertes, insbesondere ereignisgesteuertes Umschalten erreicht. Hierzu sind verschiedene Varianten denkbar. Im bevorzugten Ausführungsbeispiel wird mittels eines Ernteguterkennungssystems (beispielsweise bereitgestellt durch die Kamera 14) festgestellt, ob Erntegut G aufgenommen wird. Ist dies der Fall, wird der Erntemodus aktiviert, ist dies nicht der Fall, wird der Vorgewendemodus aktiviert. Die so weiterhin bereitgestellte automatische Geschwindigkeitsregelung im Vorgewende ergänzt die Regelung im Erntemodus, so dass der Fahrer während des gesamten Feldeinsatzes von der Auswahl der Fahrgeschwindigkeit entlastet wird.

### Bezugszeichenliste

- 1: Kombination
- 2: Traktor
- 3: Ballenpresse
- 4: Pickup
- 5: Schneideinrichtung
- 6: Raffer
- 7: Presskolben
- 8: Antriebswelle
- 9: Antriebsmotor
- 10: Steuereinrichtung
- 11: Bedieneinheit
- 12: Fahrerkabine
- 13: Datenbussystem
- 14: Kamera
- 15: Lastsensor
- 16: Feuchtesensor
- 17: Fahrregler

- S: Schwad
- G: Erntegut
- B: gepresster Ballen
- v: Fahrgeschwindigkeit

## Patentansprüche

1. Kombination (1) aus einem Zugfahrzeug (2), insbesondere einem Traktor, und einer davon gezogenen landwirtschaftlichen Erntemaschine (3), insbesondere einer Ballenpresse oder einem Ladewagen, wobei die Erntemaschine (3) zumindest ein Arbeitsaggregat (4, 5, 6, 7) zur Förderung und/oder Bearbeitung von Erntegut (G) umfasst und mit dem Zugfahrzeug (2) in Antriebsverbindung steht, um zum Betrieb des zumindest einen Arbeitsaggregats (4, 5, 6, 7) von dem Zugfahrzeug (2) mit Antriebsleistung versorgt zu werden, mit einer Steuereinrichtung (10), die in einem Erntemodus betreibbar ist, um in Abhängigkeit erfasster Betriebsparameter der Erntemaschine (3) und des Zugfahrzeugs (2) eine Fahrgeschwindigkeit (v) für die Kombination (1) vorzugeben, **dadurch gekennzeichnet, dass** die von der Steuereinrichtung (10) vorgegebene Fahrgeschwindigkeit (v) derart gewählt ist, dass die Kombination (1) unter Gewährleistung eines sicheren Betriebs zumindest ein vom Maschinenbediener vorgebbares Ernteziel erreicht, und dass die Steuereinrichtung (10) betreibbar ist, mehrere Ernteziele zu berücksichtigen, wobei durch den Maschinenbediener eine Gewichtung der Ernteziele untereinander vorgebbar ist, wobei es sich bei dem zumindest einen Ernteziel um die Erreichung eines hohen Durchsatzes und bei einem weiteren Ernteziel um die Erreichung einer hohen Erntegutqualität handelt, wobei die Gewichtung der Ernteziele untereinander mittels eines Schiebereglers einstellbar ist.

2. Kombination nach einem der vorigen Ansprüche, **dadurch gekennzeichnet, dass** als Betriebsparameter der Erntemaschine (3) zumindest eine die mechanische Belastung eines oder mehrerer Arbeitsaggregate (4, 5, 6, 7, 8) kennzeichnende Größe, wie insbesondere deren Geschwindigkeit, Drehmoment, Arbeitsdruck und/oder dergleichen berücksichtigt wird.

3. Kombination nach einem der vorigen Ansprüche, **dadurch gekennzeichnet, dass** als Betriebsparameter der Erntemaschine (3) zumindest eine auf den Ernteprozess bezogene Größe wie insbesondere die Erntegutfeuchte, das Erntegutvolumen, die Pressdichte, die Paketgröße, der Durchsatz und/oder dergleichen berücksichtigt wird.

4. Kombination nach einem der vorigen Ansprüche, **dadurch gekennzeichnet, dass** als Betriebsparameter des Zugfahrzeugs (2) die Last dessen Antriebsmotors (9) und/oder die aktuelle Getriebeübersetzung des Fahrantriebs des Zugfahrzeugs (2) berücksichtigt wird.

5. Kombination nach einem der vorigen Ansprüche, **dadurch gekennzeichnet, dass** die Steuereinrichtung (10) bei der Vorgabe der Fahrgeschwindigkeit (v) technische Kenndaten des Zugfahrzeugs (2), der Erntemaschine (3) und/oder der Kombination (1) berücksichtigt.

6. Kombination nach einem der vorigen Ansprüche, **dadurch gekennzeichnet, dass** die Steuereinrichtung (10) betreibbar ist, eine Obergrenze für die Fahrgeschwindigkeit (v) zu setzen, wenn der Wert eines Betriebsparameters oder die Werte einer Kombination von Betriebsparametern ein Anzeichen für eine drohende Überlastung oder einen allgemein unerwünschten Zustand sind.

7. Kombination nach einem der vorigen Ansprüche, **dadurch gekennzeichnet, dass** die durch die Steuereinrichtung (10) in Abhängigkeit der Betriebsparameter vorgegebene Fahrgeschwindigkeit (v) auf empirisch ermittelten Werten beruht.

8. Kombination nach einem der vorigen Ansprüche, **dadurch gekennzeichnet, dass** die Steuereinrichtung (10) der Erntemaschine (3) zugeordnet ist, wobei die Steuereinrichtung (10) mit dem Zugfahrzeug (2) insbesondere über ein Bussystem (13) in Signalverbindung bringbar ist, um am Zugfahrzeug (2) erfasste Betriebsparameter zu empfangen.

9. Kombination nach einem der vorigen Ansprüche, **dadurch gekennzeichnet, dass** der Steuereinrichtung (10) eine Bedieneinrichtung (11) zugeordnet ist, die vorzugsweise in einer Fahrerkabine (12) des Zugfahrzeugs (2) angeordnet ist und mit der Steuereinrichtung (10) in Kommunikationsverbindung bringbar ist.

10. Kombination nach einem der vorigen Ansprüche, **dadurch gekennzeichnet, dass** sich die Steuereinrichtung (10) alternativ zum Erntemodus in einem Vorgewendemodus betreiben lässt, in welchem die Steuereinrichtung (10) für die Kombination (1) eine geeignete Fahrgeschwindigkeit (v₀) vorgibt, um die Kombination (1) am Feldende zu wenden.

11. Kombination nach Anspruch 10, **dadurch gekennzeichnet, dass** der Wechsel zwischen einem Betrieb der Steuereinrichtung (10) im Erntemodus und im Vorgewendemodus durch den Maschinenbediener manuell auslösbar ist.

12. Kombination nach Anspruch 10 oder 11, **dadurch gekennzeichnet, dass** zumindest der Wechsel aus dem Betrieb der Steuereinrichtung (10) im Vorgewendemodus in den Erntemodus automatisiert, insbesondere ereignisgesteuert erfolgt.

## Claims

1. A combination (1) comprising a towing vehicle (2), in particular a tractor, and an agricultural harvester (3) towed thereby, in particular a bale press or a loading wagon, wherein the harvester (3) has at least one working assembly (4, 5, 6, 7) for conveying and/or processing crop material (G) and is drivingly connected to the towing vehicle (2) to be supplied with drive power by the towing vehicle (2) for operation of the at least one working assembly (4, 5, 6, 7), with a control device (10) operable in a harvesting mode to predetermine a travel speed (v) for the combination (1) in dependence on detected operating parameters of the harvester (3) and the towing vehicle (2),
**characterised in that**
the travel speed (v) predetermined by the control device (10) is so selected that the combination (1) achieves at least one harvesting aim which can be predetermined by the machine operator while ensuring safe operation, and the control device (10) is operable to take account of a plurality of harvesting aims, wherein weighting of the harvesting aims relative to each other can be predetermined by the machine operator, wherein the at least one harvesting aim is the attainment of a high throughput rate and a further harvesting aim is the attainment of a high crop material quality, wherein the weighting of the harvesting aims relative to each another can be adjusted by means of a slide controller.

2. A combination according to one of the preceding claims, **characterised in that** at least one variable characterising the mechanical loading of one or more working assemblies (4, 5, 6, 7, 8) like in particular the speed, torque, working pressure and/or the like thereof is taken into consideration as operating parameters of the harvester (3).

3. A combination according to one of the preceding claims, **characterised in that** at least one variable related to the harvesting process like in particular the crop material moisture content, the crop material volume, the pressing density, the packet size, the throughput and/or the like is taken into consideration as operating parameters of the harvester (3).

4. A combination according to one of the preceding claims, **characterised in that** the load of the drive engine (9) of the towing vehicle (2) and/or current transmission ratio of the travel drive of the towing vehicle (2) is taken into account as operating parameters of the towing vehicle (2).

5. A combination according to one of the preceding claims, **characterised in that** the control device (10) takes into account technical characteristic data of the towing vehicle (2), the harvester (3) and/or the combination (1) when predetermining the travel speed (v) .

6. A combination according to one of the preceding claims, **characterised in that** the control device (10) is operable to set an upper limit for the travel speed (v) if the value of an operating parameter or the values of a combination of operating parameters are an indication of a threatening overloading or a generally undesirable state.

7. A combination according to one of the preceding claims, **characterised in that** the travel speed (v) which is predetermined by the control device (10) in dependence on the operating parameters is based on empirically ascertained values.

8. A combination according to one of the preceding claims, **characterised in that** the control device (10) is associated with the harvester (3), wherein the control device (10) can be brought into signal communication with the towing vehicle (2), in particular by way of a bus system (13), to receive operating parameters detected at the towing vehicle (2) .

9. A combination according to one of the preceding claims, **characterised in that** associated with the control device (10) is an operating device (11) which is preferably arranged in a driver cab (12) of the towing vehicle (2) and can be brought into communication relationship with the control device (10) .

10. A combination according to one of the preceding claims, **characterised in that** alternatively to the harvesting mode the control device (10) can be operated in a headland mode in which the control device (10) predetermines a suitable travel speed (v₀) for the combination (1) to turn the combination (1) at the end of the field.

11. A combination according to claim 10, **characterised in that** the change between operation of the control device (10) in the harvesting mode and in the headland mode can be manually triggered by the machine operator.

12. A combination according to claim 10 or claim 11, **characterised in that** at least the change from operation of the control device (10) in the headland mode into the harvesting mode is effected in automated fashion, in particular in event-controlled fashion.

## Revendications

1. Combinaison (1) d'un véhicule de traction (2), en particulier d'un tracteur, et d'une machine agricole de récolte (3) tirée par celui-ci, la machine de récolte (3) comprenant au moins un organe de travail (4, 5, 6, 7) pour amener et/ou traiter du produit récolté (G) et étant en liaison d'entraînement avec le véhicule de traction (2) afin de pouvoir être alimentée en puissance d'entraînement par le véhicule de traction (2) pour actionner le au moins un organe de travail (4, 5, 6, 7), comprenant un équipement de commande (10) qui est exploitable dans un mode de récolte pour prescrire une vitesse de marche (v) de la combinaison (1) en fonction de paramètres d'exploitation détectés de la machine de récolte (3) et du véhicule de traction (2), **caractérisé en ce que** la vitesse de marche (v) prescrite par l'équipement de commande (10) est choisie de façon que la combinaison (1) atteigne au moins un objectif de récolte prescriptible par l'utilisateur de la machine en garantissant une exploitation sûre, et **en ce que** l'équipement de commande (10) est exploitable pour prendre en compte plusieurs objectifs de récolte, une pondération des objectifs de récolte entre eux étant prescriptible par l'utilisateur de la machine, dans lequel le au moins un objectif de récolte consiste à atteindre un débit élevé et un autre objectif de récolte consiste à atteindre une qualité de produit récolté élevée, la pondération des objectifs de récolte entre eux étant ajustable à l'aide d'un curseur.

2. Combinaison selon une des revendications précédentes, **caractérisée en ce que** le paramètre d'exploitation de la machine de récolte (3) pris en compte est au moins une grandeur caractérisant la sollicitation mécanique d'une ou plusieurs organes de travail (4, 5, 6, 7, 8), comme en particulier leur vitesse, leur moment de rotation, leur pression de travail et/ou analogues.

3. Combinaison selon une des revendications précédentes, **caractérisée en ce que** le paramètre d'exploitation de la machine de récolte (3) prise en compte est au moins une grandeur relative au processus de récolte comme, en particulier, l'humidité du produit récolté, le volume de produit récolté, la densité de pressage, la taille des paquets, le débit et/ou analogues.

4. Combinaison selon une des revendications précédentes, **caractérisée en ce que** le paramètre d'exploitation du véhicule de traction (2) pris en compte est la charge de son moteur d'entraînement (9) et/ou le rapport instantané de la transmission du véhicule de traction (2) .

5. Combinaison selon une des revendications précédentes, **caractérisé en ce que**, lors de la prescription de la vitesse de marche (v), l'équipement de commande (10) prend en compte des données caractéristiques techniques du véhicule de traction (2), de la machine de récolte (3) et/ou de la combinaison (1).

6. Combinaison selon une des revendications précédentes, **caractérisée en ce que** l'équipement de commande (10) est exploitable pour fixer une limite supérieure à la vitesse de marche (v) lorsque la valeur d'un paramètre d'exploitation ou les valeurs d'une combinaison des paramètres d'exploitation sont l'indice d'une surcharge imminente ou d'un état généralement indésirable.

7. Combinaison selon une des revendications précédentes, **caractérisée en ce que** la vitesse de marche (v) prescrite par l'équipement de commande (10) en fonction des paramètres d'exploitation repose sur des valeurs obtenues empiriquement.

8. Combinaison selon une des revendications précédentes, **caractérisée en ce que** l'équipement de commande (10) est associé à la machine de récolte (3), l'équipement de commande (10) pouvant être mis en liaison signalétique avec le véhicule de traction (2), en particulier par l'intermédiaire d'un système de bus (13) afin de recevoir des paramètres d'exploitation captés sur le véhicule de traction (2).

9. Combinaison selon une des revendications précédentes, **caractérisée en ce qu'**à l'équipement de commande (10) est associé un équipement d'utilisation (11) qui est disposé de préférence dans une cabine de conduite (12) du véhicule de traction (2) et peut être mis en liaison de communication avec l'équipement de commande (10) .

10. Combinaison selon une des revendications précédentes, **caractérisée en ce que**, selon une variante au mode de récolte, l'équipement de commande (10) peut être exploité dans un mode de tournière dans lequel l'équipement de commande (10) prescrit pour la combinaison (1) une vitesse de marche appropriée (v₀) appropriée pour faire tourner la combinaison (1) en bout de champ.

11. Combinaison selon la revendication 10, **caractérisée en ce que** le passage entre une exploitation de l'équipement de commande (10) en mode de récolte et en mode de tournière est déclenchable manuellement par l'utilisateur de la machine.

12. Combinaison selon la revendication 10 ou 11, **caractérisé en ce qu'**au moins le passage de l'exploitation de l'équipement de commande (10) en mode de tournière au mode de récolte s'effectue de façon automatisée, en particulier en fonction d'évènements.
